# EUROPEAN PATENT APPLICATION

(11) **EP 2 945 202 A1**
(43) Date of publication of application: **18.11.2015**
(21) Application number: 15167685.5
(22) Date of filing: 13.05.2015
(51) Int. Cl.: H01M 2/02, H01M 2/16, H01M 10/04, H01M 10/052, H01M 10/0583, H01M 4/04, H01M 2/22, H01M 2/26

(54) **CURVED BATTERY AND MANUFACTURING METHOD THEREOF**

(30) Priority: 14.05.2014 TW 103116959
(71) Applicant: SYNergy ScienTech Corp., Hsinchu (TW)
(72) Inventor: Tsai, Chin Huang, Hsinchu (TW); Lin, Zong Ci, Hsinchu (TW); Yeh, Yu Wen, Hsinchu (TW); Wang, Kuang Chang, Hsinchu (TW); Xing, Xue Kun, Hsinchu (TW)
(74) Representative: Lang, Christian

(57) **Abstract**

A curved battery includes a protection member, a battery unit and a conductive material. The battery unit is disposed in the protection member and has a shape corresponding to the protection member. The battery unit includes a first electrode layer, a second electrode layer, a first conductive handle, a second conductive handle, a first isolation layer and a second isolation layer. The first conductive handle and the second conductive handle point to directions perpendicular to an axial direction of the battery unit and extend out of the protection member via two openings of the protection member. Thus, the curved battery is allowed with a large curvature that is less likely to cause damages of the battery unit.

## Description

### BACKGROUND OF THE RELATED ART

### Technical Field

The present invention relates to a battery structure and manufacturing method thereof, and more particularly, to a curved battery having an arc shape.

### Related Art

With progressing technologies, certain electronic products have gradually evolved from household electronic products to personal portable electronic products. To provide electronic products with easy portability, the function of batteries is relatively critical. To satisfy consumer needs, portable electronic products are also developed towards the trend of being light, compact and convenient. Meanwhile, considering appearances of electronic products and structural designs of human body parts, instead of being a conventional rectangular structure, demands for batteries in an arc shape have steadily risen.

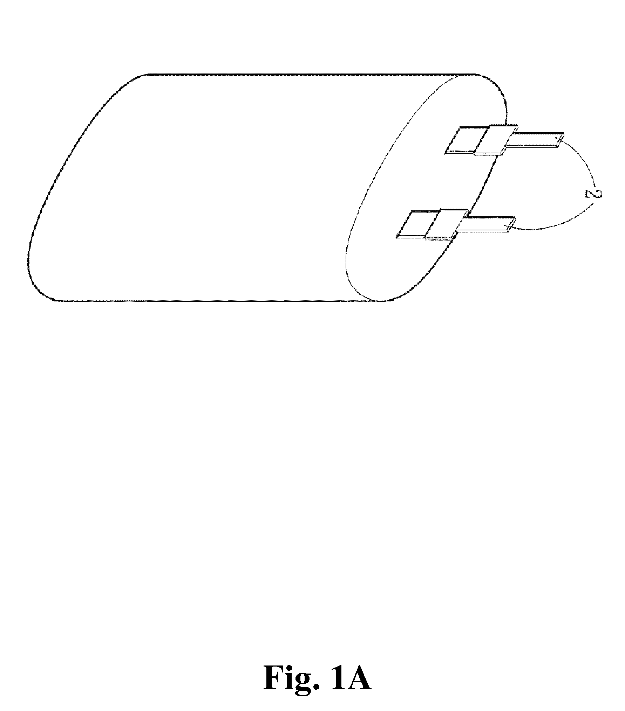

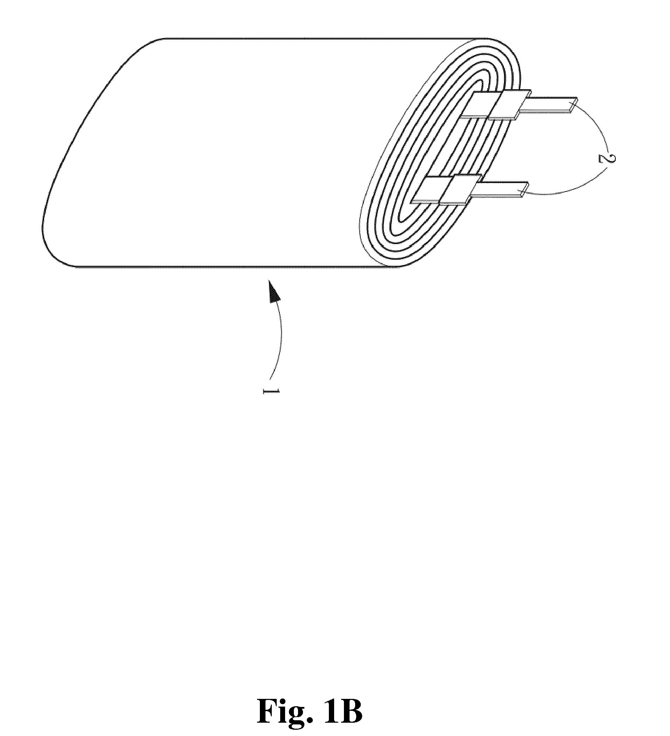

Referring to Fig. 1A and Fig. 1B showing a structure of a conventional battery, the conventional battery includes a protection housing having two openings, and an element 1 disposed in the protection housing. The element 1 is formed by sequentially stacking and winding an anode plate, a first separation membrane, a cathode plate and a second separation membrane. At the element 1, a conductive handle 2 is nailed at a position of a vertical winding direction of each of the anode plate and the cathode plate, such that the element 1 is in communication to an exterior of the protection housing from the openings of the protection housing via the conductive handles 2.

To provide a conventional battery with a curvature, a conventional method adopts external heating and pressurizing means to directly process the conventional battery from a flat plane to a curved plane. However, as the element 1 in the conventional battery receives pressure and deformation in a non-winding direction, the internal anode plate and cathode plate may be damaged or even broken due to extrusion of the stress received. As a result, not only short circuitry in the battery may be caused to fail an intended function, but also the protection housing may become creased by flexure of the external force, leading to liquid leakage and malfunction of the battery.

Further, to satisfy the gradual miniaturization trend of portable electronic products, the volume of batteries used in portable electronic devices needs to be reduced. As batteries used in portable electronic devices are mostly rectangular in shape, such conventional batteries are limited to applications of rectangular portable electronic devices, and cannot be employed in portable electronic products having curved, circular or other irregular shapes. Consequently, with the conventional batteries, an appearance design of products may be limited and internal spaces of products may not be efficiently utilized.

### SUMMARY

It is a primary object of the present invention to provide a battery applicable to electronic products in different shapes.

To achieve the above object, the present invention provides a curved battery. The curved battery includes a protection member, a battery unit and a conductive material. The protection member having a curvature, that includes at least one conductive handle side a liquid injecting side, and two openings disposed at the conductive handle side. The battery unit is disposed in the protection member and has a shape corresponding to the protection member. The battery unit includes a first electrode layer, a second electrode layer, a first conductive handle disposed at one end of the first electrode layer, a second conductive handle disposed at one end of the second electrode layer, a first isolation layer disposed between the first electrode layer and the second electrode layer, and a second isolation layer disposed at one side of the second electrode layer away from the first isolation layer. The conductive material is injected into the protection member and fills the battery unit. Further, to form the battery unit, the first electrode layer, the first isolation layer, the second electrode layer and the second isolation layer are sequentially stacked and winded to form the battery unit in a winded formed. Pointing directions of the first conductive handle and the second conductive handle are perpendicular to an axial direction of the battery unit. The first conductive handle and the second conductive handle extend out of the protection member via the two openings at the conductive handle side, so as to prevent the conductive material from leaking out of the curved battery along the first conductive handle and the second conductive handle.

The present invention further discloses a manufacturing method of a curved battery. The manufacturing method includes following steps.

In step S1, a first conductive handle and a second conductive handle are disposed at one end of a first electrode layer and a second electrode layer, respectively.

In step S2, the first electrode layer, a first isolation layer, the second electrode layer and a second electrode layer are sequentially stacked to form a layered structure.

In step S3, the layered structure is winded to form a battery unit. Pointing directions of the first conductive handle and the second conductive handle are perpendicular to an axial direction of the battery unit.

In step S4, the battery unit is placed in a protection member. The protection member includes a conductive handle side, a liquid injecting side and two openings disposed at the conductive handle side.

In step S5, a conductive material is injected into the protection member from the liquid injecting side to have the conductive material fill the battery unit.

In step S6, the liquid injecting side is sealed to complete the manufacturing process of the curved battery.

It is known from the above description that the present invention provides following features.

1. The pointing directions of the first conductive handle and the second conductive handle are disposed to be perpendicular to the axial direction of the battery unit. Thus, the curvature of the battery unit can be readily and easily modified when the battery unit is winded and folded to effectively prevent damages of the electrode layers.

2. After the battery unit is placed in the protection member, the protection member can be simply formed outside the battery unit to further manufacture the curved battery.

3. By sealing the liquid injecting side of the protection member as an arc form, the curvature of the curved battery is maintained.

### BRIEF DESCRIPTION OF THE DRAWINGS

Fig. 1A is a schematic diagram of a structure of a conventional battery;
Fig. 1B is a schematic diagram of an element of a conventional battery;
Fig. 2 is a schematic diagram of a structure of the present invention;
Fig. 3 is a schematic diagram of a battery unit of the present invention;
Fig. 4A is a schematic diagram of a position for disposing a first adhesion portion;
Fig. 4B is a schematic diagram of a position for disposing a first adhesion portion;
Fig. 5A is a schematic diagram of a position for disposing a first auxiliary adhesion portion;
Fig. 5B is a schematic diagram of a position for disposing a second auxiliary adhesion portion;
Fig. 6A is a partial section view of a structure of a first electrode layer;
Fig. 6B is a partial section view of a structure of a second electrode layer;
Fig. 7 is a side view of a structure of the present invention;
Fig. 8 is a schematic diagram of a manufacturing process of the present invention;
Fig. 9 is a schematic diagram for winding the layered structure by the S-type winding method; and
Fig. 10 is a schematic diagram for winding the layered structure by the U-type winding method.

### DETAILED DESCRIPTION

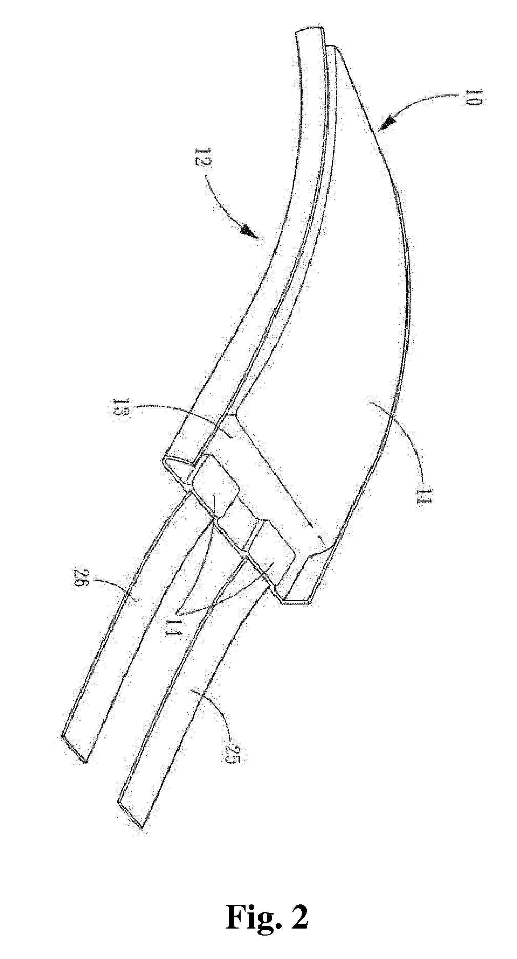

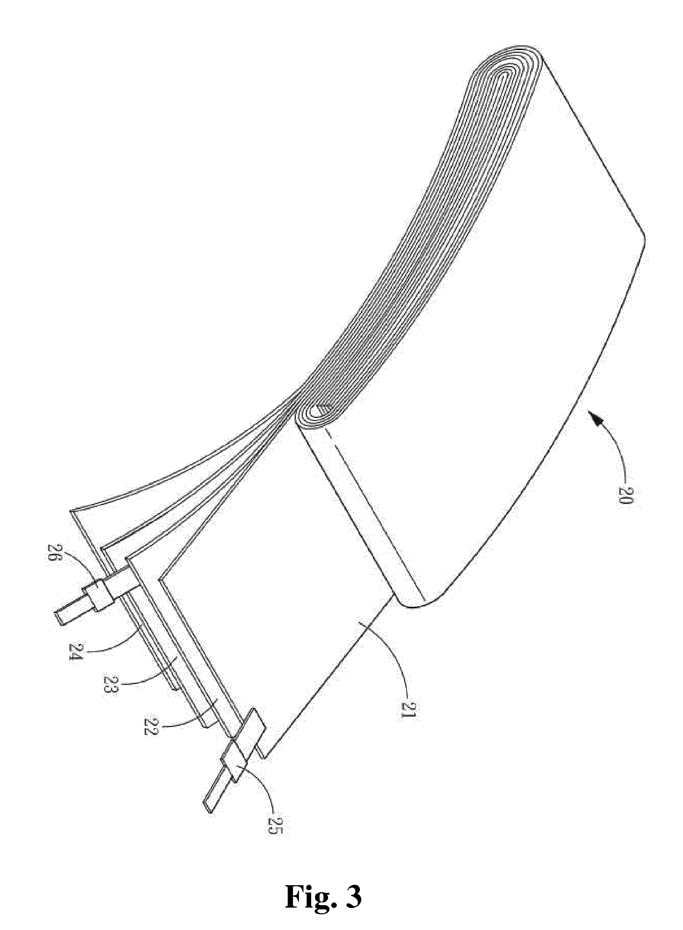

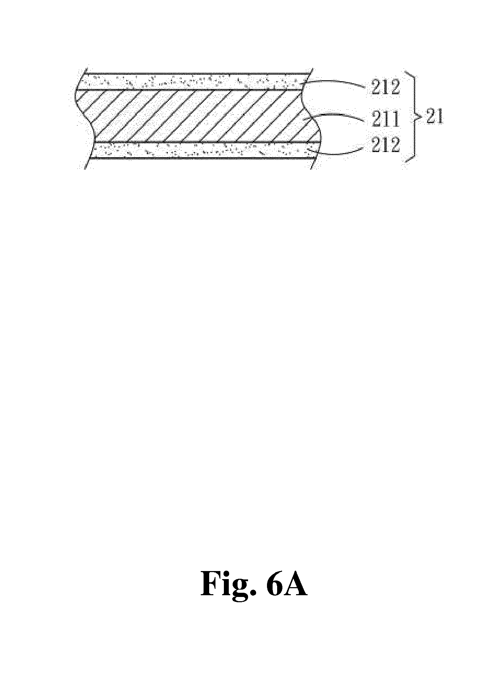

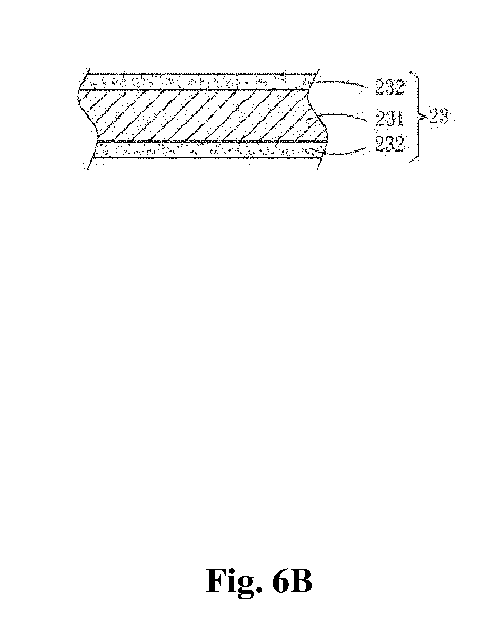

Details and technical contents of the present invention are described below with the accompanying drawings. In one embodiment, referring to Fig. 2, Fig. 3, Fig. 4A, Fig. 4B, Fig. 5A and Fig. 5B, an arched, non-planar, rechargeable curved battery of the present invention includes an arc protection member 10, a battery unit 20 and a conductive material (not shown). The arc protection member 10 includes an upper curved wall 11, a lower curved wall 12 opposite the upper curved wall 11, a conductive handle side 13 connecting the upper curved wall 11 and the lower curved wall 12, and two openings 14 disposed at the conductive handle side 13. The battery unit 20 is disposed in the arc protection member 10 and has a shape corresponding to the arc protection member 10. Further, the battery unit 20 includes a first electrode layer 21, a second electrode layer 23, a first conductive handle 25 disposed at one end of the first electrode layer 21, a second conductive handle 26 disposed at one end of the second conductive layer 23 corresponding to the first conductive handle 25, a first isolation layer 22 disposed between the first electrode layer 21 and the second electrode layer 23, and a second isolation layer 24 disposed at one side of the second electrode layer 23 away from the first isolation layer 22. The conductive material fills the arc protection layer 10 and also fills the battery unit 20. Materials of the first isolation layer 22 and the second isolation layer 24 are multi-layer membranes formed by at least one of polypropylene and polyethylene. The conductive material is a liquid-state electrolyte, a colloidal-state electrolyte, or a solid-state electrolyte. Referring to Fig. 6A and Fig. 6B, the first electrode layer 21 includes a first electrode substrate 211 and a first auxiliary electrode layer 212 cladding the first electrode substrate 211; the second electrode layer 23 includes a second electrode substrate 231 and a second auxiliary electrode layer 232 cladding the second electrode substrate 231. For example, a material of the first electrode substrate 211 is metal aluminum; a material of the first auxiliary electrode layer 212 is lithium nickel oxide, lithium manganese oxide, lithium iron oxide or lithium cobalt oxide, or a metal oxide of a combination of the above materials. For example, a material of the second electrode substrate 231 is metal copper, and a material of the second auxiliary electrode layer 232 is carbon, a silicon carbon alloy, a tin alloy, titanium lithium oxide, a carbon alloy formed by a combination of the above materials, or other materials that allow lithium ions to enter and exit. In this embodiment, the first electrode layer21, the first isolation layer 22, the second electrode layer 23 and the second isolation layer 24 are sequentially stacked. The battery unit 20 is winded from one end away from the first conductive handle 25 and the second conductive handle 26 towards directions of the first conductive handle 25 and the second conductive handle 26 to form the battery unit 20 in a winded formed. Pointing directions of the first conductive handle 25 and the second conductive handle 26 are perpendicular to an axial direction of the battery unit 20. The first conductive handle 25 and the second conductive handle 26 extend out of the arc protection member 10 via the two openings 14 at the conductive handle side 13, so as to prevent the conductive material from leaking out of the curved battery along the first conductive handle 25 and the second conductive handle 26. In real implementation, in addition to the arc protection member 10, the protection member may be achieved by spiral, circular, or other method with curvature. The arc protection member 10 which is merely an example without limiting the present invention.

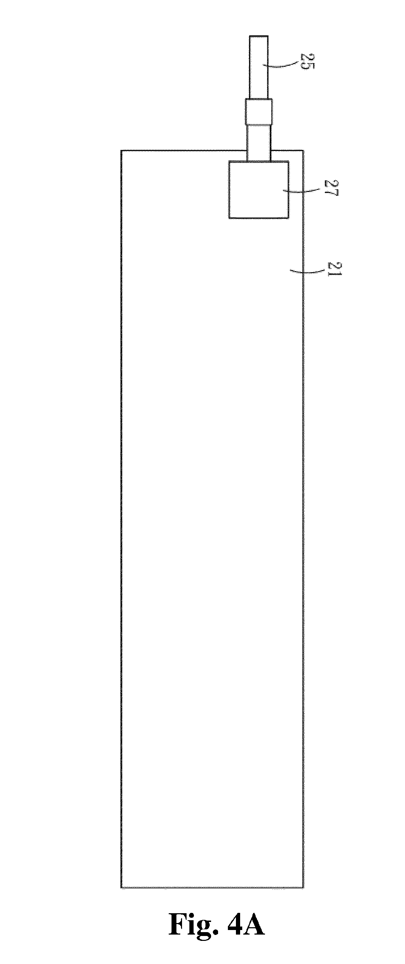

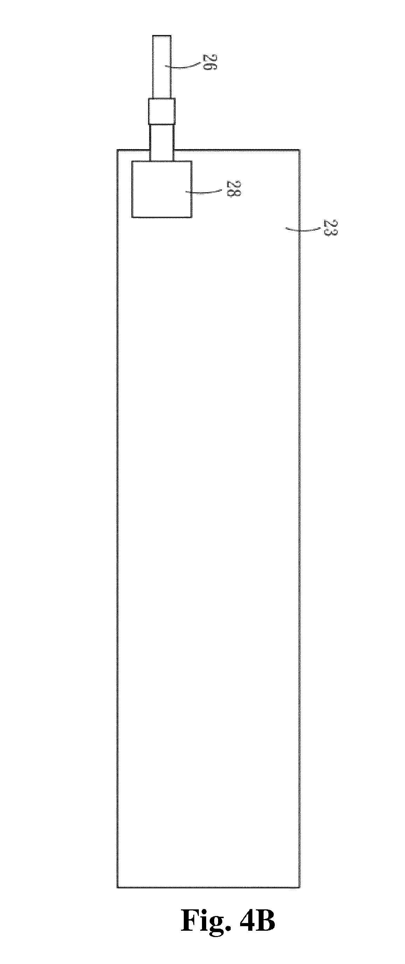

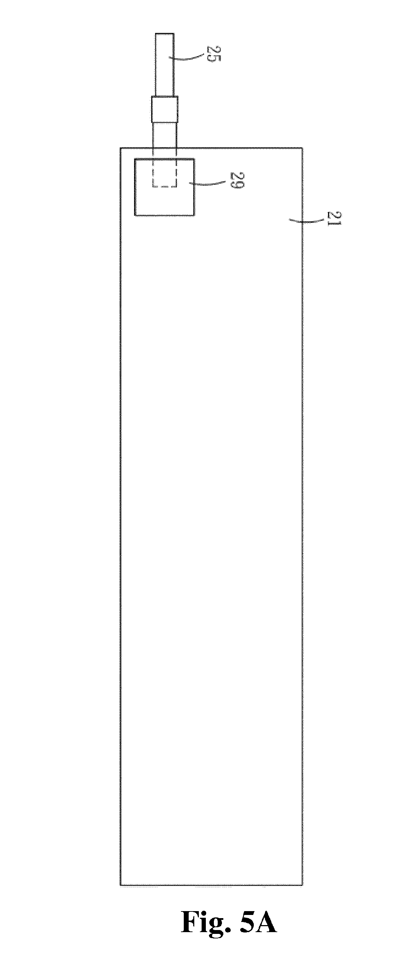

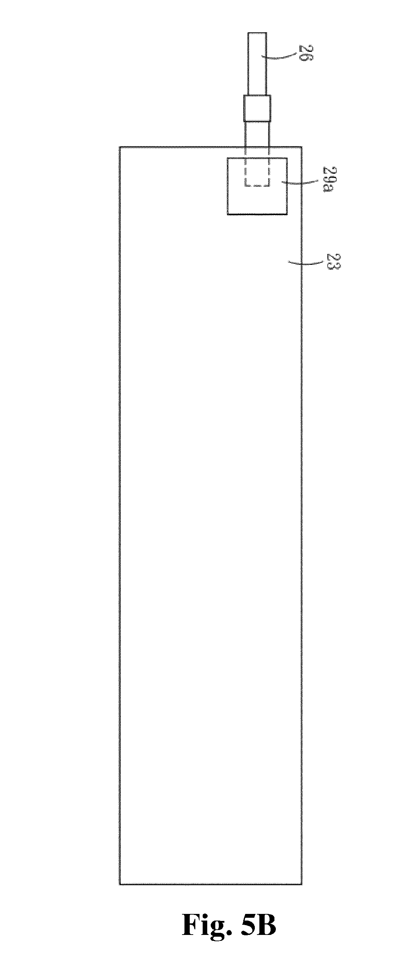

Referring to Fig. 4A, Fig. 4B, Fig. 5A and Fig. 5B, the battery unit 20 further includes a first adhesion portion 27 connected to the first conductive handle 25 and the first electrode layer 21, and a second adhesion portion 28 connected to the second conductive handle 26 and the second electrode layer 23. By disposing the first adhesion portion 27 and the second adhesion portion 28, the first conductive handle 25 and the second conductive handle 26 are securely connected to the first electrode layer 21 and the second electrode layer 23, respectively. To further prevent the first conductive handle 25 and the second conductive handle 26 from puncturing the first isolation layer 22 or the second isolation layer 24, in the curved battery of the present invention, the battery unit 20 further includes a first auxiliary adhesion portion 29 disposed at one side of the first electrode layer 21 away from the first conductive handle 25, and a second auxiliary adhesion portion 29a disposed at one side of the second electrode layer 23 away from the second conductive handle 26. Further, the first auxiliary adhesion portion 29 and the second auxiliary adhesion portion 29a correspond to positions of the first adhesion portion 27 and the second adhesion portion 28, respectively. By disposing the first adhesion portion 27 and the second adhesion portion 28, not only the first conductive handle 25 and the second conductive handle 26 are allowed to be securely connected to the first electrode layer 21 and the second electrode layer 23, respectively, but also an effect of preventing the first conductive handle 25 and the second conductive handle 26 from puncturing the first isolation layer 22 or the second isolation layer 24 is achieved. In addition, the first auxiliary adhesion portion 29 and the second auxiliary adhesion portion 29a may further prevent the first conductive handle 25 and the second conductive handle 26 from causing a puncture issue, thereby preventing issues caused by puncturing for the curved battery.

Further, the first electrode layer 21, the first isolation layer 22, the second electrode layer 23 and the second isolation layer 24 are sequentially stacked, and the battery unit 20 is winded from one away from the first conductive handle 25 and the second conductive handle 26 towards the first conductive handle 25 and the second conductive handle 26 to form the battery unit 20 in a winded form. In the present invention, the first conductive handle 25 and the second conductive handle 26 are disposed parallel to a winding direction of the batter unit 24 at the first electrode layer 21 and the second electrode layer 23, respectively. Thus, pointing directions of the first conductive handle 25 and the second conductive handle 26 are perpendicular to an axial direction of the winded battery unit 20, and the conductive handle 25 and the second conductive handle 26 are extended out of the arc protection member 10 via the two openings 14 at the conductive handle side 13. By disposing the first conductive handle 25 and the second conductive handle 26 to be parallel to the winding direction of the battery unit 20 through nail connection means, the curvature of the battery unit 20 is not limited by the disposition of the first conductive handle 25 and the second conductive handle 26 when the battery unit 20 forms the curved battery. Further, the liquid-state electrolyte or colloidal-state electrolyte is prevented from leaking from an axial gap of the winded battery unit 20 along the first conductive handle 25 and the second conductive handle 26, thus preventing leakage of the electrolyte.

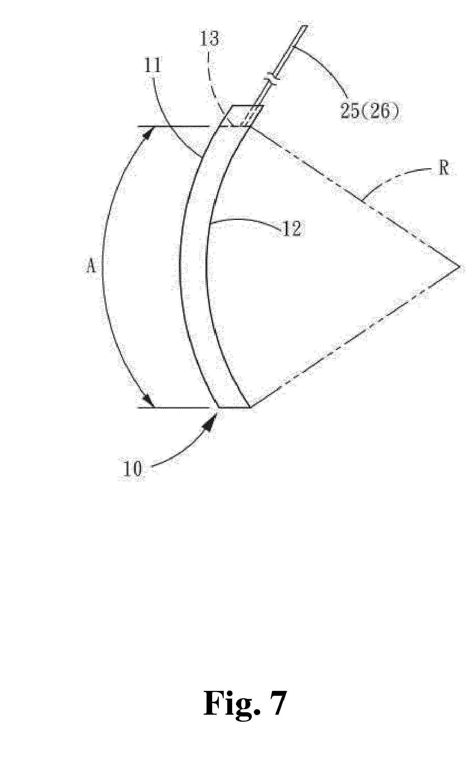

Referring to Fig. 7 showing a defining method of the curvature of the curved battery, A represents a length of the upper curved wall 11 of the curved battery, and R represents a radius of a circle formed by the curvature of the curved battery. By confirming the length A and the radius R, the curvature of the curved battery can be defined. In the present invention, a value of the length A is 10mm to 200mm, and a value of the radius R is 10mm to 1000mm.

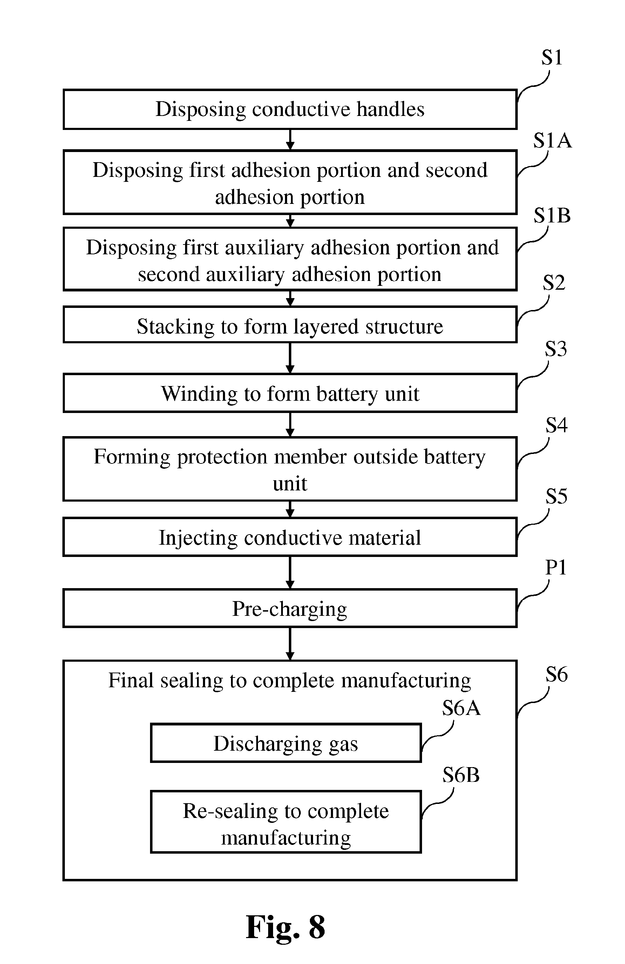

In continuation of the above, the present invention further discloses a manufacturing method of a curved battery having an arc design. Referring to Fig. 8, the manufacturing method includes following steps.

In step S1, conductive handles are first disposed. A first conductive handle 25 and a second conductive handle 26 are disposed at one end of a first electrode layer 21 and one end of a second electrode layer 23, respectively. The first electrode layer 21 includes a first electrode substrate 211 and a first auxiliary electrode layer cladding the first electrode substrate 211, and the second electrode layer 23 includes a second electrode substrate 231 and a second auxiliary electrode layer 232 cladding the second electrode substrate 231. A material of the first electrode substrate 211 is metal aluminum, and a material of the first auxiliary electrode layer 212 is selected from a group consisting of lithium nickel oxide, lithium manganese oxide, lithium iron oxide, lithium cobalt oxide, and a combination of the above materials. A material of the second electrode substrate 231 is metal copper, and a material of the second auxiliary electrode layer 232 is selected from carbon, a silicon carbon alloy, a tin alloy, titanium lithium oxide, a carbon alloy formed by a combination of the above materials, and other materials that allow lithium ions to enter and exit.

In the implementation, the above step S1 may further comprising the following two steps:

In step S1A, a first adhesion portion and a second adhesion portion are disposed. A first adhesion portion 27 and a second adhesion portion 28 are adhered to a position of the first electrode layer 21 where the first conductive handle 25 is disposed and the a position of the second electrode layer 23 where the second conductive handle 26 is disposed, respectively, so as to secure the first conductive handle 25 and the second conductive handle 26.

In step S1B, a first auxiliary adhesion portion and a second auxiliary adhesion portion are disposed. A first auxiliary adhesion portion 29 and a second auxiliary adhesion portion 29a are adhered to one side of the first electrode layer 21 and one side the second electrode layer 23 away from the first conductive handle 25 and the second conductive handle 26, respectively. Further, the first auxiliary adhesion portion 29 and the second auxiliary adhesion portion 29a correspond to positions of the first adhesion portion 27 and the second adhesion portion 28, respectively, so as to prevent the first conductive handle 25 and the second conductive handle 26 from causing puncturing and hence malfunction of the curved battery.

In step S2, stacking is performed to form a layered structure. The stacking may comprise aligning. The first electrode layer 21, a first isolation layer 22, the second electrode layer 23 and a second isolation layer 24 are sequentially aligned and stacked to form a layered structure. The first isolation layer 22 and the second isolation layer 24 are multi-layer membranes formed by at least one of polypropylene and polyethylene.

In step S3, winding is performed to form a battery unit. The layered structure is winded from one end away from the first conductive handle 25 and the second conductive handle 26 towards directions of the first conductive handle 25 and the second conductive handle 26 to form a battery unit 20. Pointing directions of the first conductive handle 25 and the second conductive handle 26 are perpendicular to an axial direction of the battery unit 20. Further, the layered structure may also be achieved by an S-type or U-type winding method to form the battery unit, to be detailed later with the accompanying figures.

In step S4, a protection member is formed outside the battery unit. In the example of the arc protection member 10, the battery unit 20 is placed in a first arched recess of a protection member mold, and the protection member mold is folded along a first folding line to form an arc protection member 10 in which the battery unit 20 is then accommodated. The arc protection member 10 includes a folding side, a conductive handle side 13 opposite the folding side, an arched side connecting the folding side and the conductive handle side 13, and a liquid injecting side opposite the arched side. At a sealing temperature of 150°C to 250°C, the conductive handle side 13 is then sealed as a flat head form and the arched side is sealed as an arc form.

In step S5, a conductive material is injected. A conductive material injected into the arc protection member 10 from the liquid injecting side to have the conductive material fill the battery unit 20. In the present invention, the conductive material is a liquid-state electrolyte, a colloidal-state electrolyte or a solid-state electrolyte.

In step P1, pre-charging is performed. In the example of the arc protection member 10, the liquid injecting side is sealed as an arc form from a first sealing section of the liquid injecting side, and a pre-charging process is performed. The arc protection member 10 further includes a gas chamber for accommodating gas generated during the pre-charging process to prevent the arc protection member 10 from damages caused by an excessive gas pressure.

In step S6, final sealing is performed to complete the manufacturing process. Similarly, in the example of the arc protection member 10, the liquid injecting side is sealed as an arc form to complete the manufacturing process of the curved battery.

To correspond to the pre-charging step of step P1, step S6 further includes following steps.

In step S6A, gas is discharged. The arc protection member 10 is cut from a cutting section of the liquid injecting side to form a ventilation opening for allowing discharging of gas generated during pre-charging. The cutting section is disposed at one side of the gas chamber away from the first sealing section.

In step S6B, re-sealing is performed to complete the manufacturing process. Re-sealing is performed from a second sealing section of the liquid injecting side as an arc form. The second sealing section is disposed at one side of the cutting section away from the gas chamber.

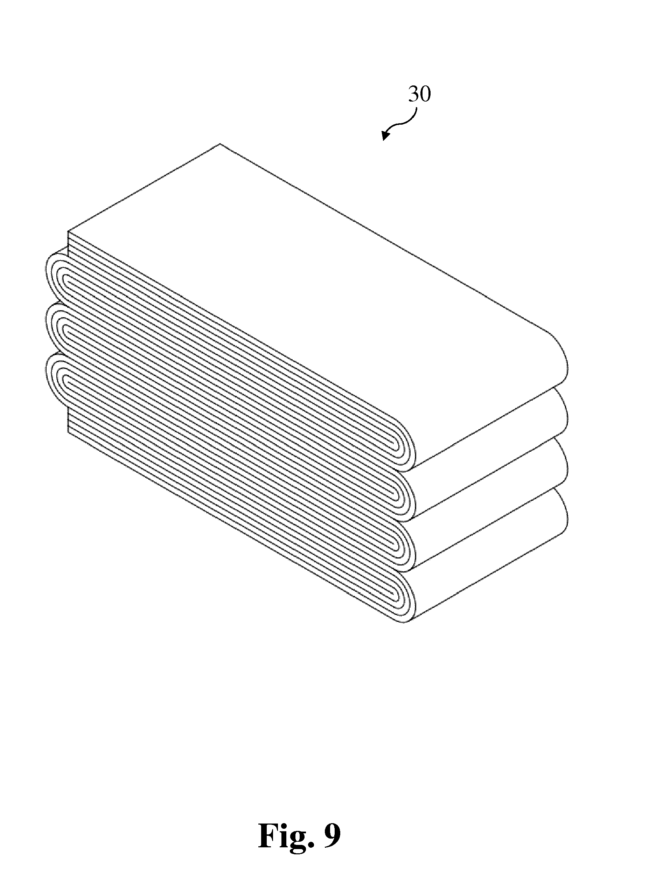

As described above, the layered structure may also be achieved by the S-type or U-type winding method to form the battery unit, referring to Fig. 9, is a schematic diagram for winding the layered structure by the S-type winding method. In real implementation, the S-type winding method may be achieved by winding single S-type or continuous S-type. The battery unit 30 shown in Fig. 9 is winding continuous S-type. In addition, this approach allows the first conductive handle and the second conductive handle disposed on the same end of the layered structure, or disposed on the different ends of the layered structure. The first conductive handle and the second conductive handle may be disposed on the two opposing conductive handle sides of the protection member.

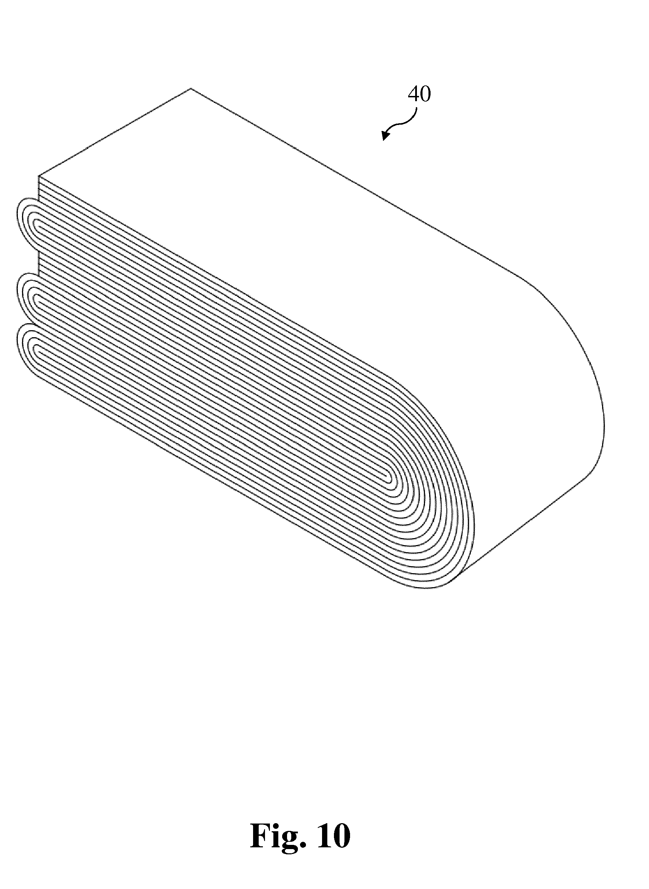

Thereafter, referring to Fig. 10, is a schematic diagram for winding the layered structure by the U-type winding method. In real implementation, the U-type winding method may be achieved by winding single U-type or multilayer U-type. Similarly, in the U-type winding method, the first conductive handle and the second conductive handle disposed on the same end of the layered structure, or disposed on the different ends of the layered structure. The first conductive handle and the second conductive handle may be disposed on the two opposing conductive handle sides of the protection member.

In conclusion, the present invention provides following features.

1. The pointing directions of the first conductive handle and the second conductive handle are disposed to be perpendicular to the axial direction of the battery unit. Thus, the curvature of the battery unit can be readily and easily modified when the battery unit is winded and folded to effectively prevent damages of the first electrode layer and the second electrode layer.

2. With the first arched recess of the protection member mold, after the battery unit is placed therein, the arc protection member can be simply formed outside the battery unit to further manufacture the curved battery.

3. By sealing the arched side and the liquid injecting side of the arc protection member as an arc form, the curvature of the curved battery is maintained.

4. The first adhesion portion and the second adhesion portion are disposed in conjunction with the first auxiliary adhesion portion and the second auxiliary adhesion portion. Thus, the first conductive handle and the second conductive handle are prevented from puncturing the first isolation layer or the second isolation layer to further prevent issues of short circuitry of the curved battery caused by puncturing.

5. As the pointing directions of the first conductive handle and the second conductive handle are disposed to be perpendicular to the axial direction of the battery unit, the liquid-state electrolyte or the solid-state electrolyte filling the battery unit is kept less likely to leak from the two openings along the first conductive handle and the second conductive handle.

## Claims

1. A curved battery, comprising:
a protection member, having a curvature, comprising at least one conductive handle side, a liquid injecting side, and two openings disposed at the conductive handle side;
a battery unit, disposed in the protection member, having a shape corresponding to the protection member, comprising a first electrode layer, a second electrode layer, a first conductive handle disposed at one end of the first electrode layer, a second conductive handle disposed at one end of the second conductive layer, a first isolation layer disposed between the first electrode layer and the second electrode layer, and a second isolation layer disposed at one side of the second electrode layer away from the first isolation layer; and
a conductive material, filling the protection member;
wherein, the pointing directions of the first conductive handle and the second conductive handle are perpendicular to an axial direction of the battery unit, and the first conductive handle and the second conductive handle extend out of the protection member from the two openings.

2. The curved battery of claim 1, wherein the battery unit further comprises a first adhesion portion connected to the first conductive handle and the first electrode layer, and a second adhesion portion connected to the second conductive handle and the second electrode layer.

3. The curved battery of claim 2, wherein the battery unit further comprises a first auxiliary adhesion portion disposed at one side of the first electrode layer away from the first conductive handle, and a second auxiliary adhesion portion disposed at one side of the second electrode layer away from the second conductive handle, the first auxiliary adhesion portion and the second auxiliary adhesion portion corresponding to positions of the first adhesion portion and the second adhesion portion, respectively.

4. The curved battery of claim 1, wherein the conductive material is selected from a group consisting of a liquid-state electrolyte, a colloidal-state electrolyte, and a solid-state electrolyte.

5. The curved battery of claim 1, wherein materials of the first isolation layer and the second isolation layer are at least one selected from a group consisting of polypropylene and polyethylene.

6. The curved battery of claim 1, wherein the first electrode layer comprises a first electrode substrate and a first auxiliary electrode layer cladding the first electrode substrate, and the second electrode layer comprises a second electrode substrate and a second auxiliary electrode layer cladding the second electrode substrate.

7. The curved battery of claim 6, wherein a material of the first electrode substrate is metal aluminum, a material of the first auxiliary electrode layer is at least one selected from a group consisting of lithium nickel oxide, lithium manganese oxide, lithium iron oxide and lithium cobalt oxide, a material of the second electrode substrate is metal copper, and a material of the second auxiliary electrode layer is at least one selected from a group consisting of carbon, a silicon carbon alloy, a tin alloy and titanium lithium oxide.

8. A manufacturing method of a curved battery, comprising:
S1: disposing a first conductive handle and a second conductive handle at one end of a first electrode layer and one end of a second electrode layer, respectively;
S2: stacking the first electrode layer, a first isolation layer, the second electrode layer and a second isolation layer sequentially to form a layered structure;
S3: winding the layered structure to form a battery unit, wherein pointing directions of the first conductive handle and the second conductive handle are perpendicular to an axial direction of the battery unit;
S4: placing the battery unit in a protection member, the protection member comprising at least one conductive handle side, a liquid injecting side, and two openings disposed at the conductive handle side;
S5: injecting a conductive material into the protection member from the liquid injecting side; and
S6: sealing the liquid injecting side to complete manufacturing the curved battery.

9. The manufacturing method of a curved battery of claim 8, between step S1 and step S2, further comprising:
S1A: adhering a first adhesion portion and a second adhesion portion to a position of the first electrode layer where the first conductive handle is disposed and a position of the second electrode layer where the second conductive handle is disposed, respectively, to accordingly secure the first conductive handle and the second conductive handle; and
S1B: adhering a first auxiliary adhesion portion and a second auxiliary adhesion portion to one side of the first electrode layer and one side of the second electrode layer away from the first conductive handle and the second conductive handle, respectively, the first auxiliary adhesion portion and the second auxiliary adhesion portion corresponding to positions of the first adhesion portion and the second adhesion portion, respectively.

10. The manufacturing method of a curved battery of claim 8, between step S5 and step S6, further comprising:
P1: sealing the liquid injecting side from a first sealing section of the liquid injecting section as an arc form, and performing pre-charging, wherein the arc protection member further comprises a gas chamber for accommodating gas generated during pre-charging to prevent the arc protection member from damages caused by an excessive gas pressure.

11. The manufacturing method of a curved battery of claim 10, wherein step S6 further comprises:
S6A: cutting the arc protection member from a cutting section of the liquid injecting side to form a ventilation opening for allowing discharging of gas generated during pre-charging, wherein the cutting section is disposed at one side of the gas chamber away from the first sealing section; and
S6B: performing re-sealing from a second sealing section of the liquid injecting side as an arc form, wherein the second sealing section is disposed at one side of the cutting section away from the gas chamber.

12. The manufacturing method of a curved battery of claim 8, wherein the conductive material is selected from a group consisting of a liquid-state electrolyte, a colloidal-state electrolyte, and a solid-state electrolyte.

13. The manufacturing method of a curved battery of claim 8, materials of the first isolation layer and the second isolation layer are at least one selected from a group consisting of polypropylene and polyethylene.

14. The manufacturing method of a curved battery of claim 8, wherein the first electrode layer comprises a first electrode substrate and a first auxiliary electrode layer cladding the first electrode substrate, and the second electrode layer comprises a second electrode substrate and a second auxiliary electrode layer cladding the second electrode substrate.

15. The manufacturing method of a curved battery of claim 14, wherein a material of the first electrode substrate is metal aluminum, a material of the first auxiliary electrode layer is at least one selected from a group consisting of lithium nickel oxide, lithium manganese oxide, lithium iron oxide and lithium cobalt oxide, a material of the second electrode substrate is metal copper, and a material of the second auxiliary electrode layer is at least one selected from a group consisting of carbon, a silicon carbon alloy, a tin alloy, and titanium and lithium oxide.
